# EUROPEAN PATENT APPLICATION

(11) **EP 4 289 989 A1**
(43) Date of publication of application: **13.12.2023**
(21) Application number: 22178279.0
(22) Date of filing: 10.06.2022
(51) Int. Cl.: C25B 1/04, C25B 15/021, C25B 15/08

(54) **METHOD AND APPARATUS FOR THE UTILISATION OF WASTE HEAT FROM AN ELECTROLYSIS REACTION FOR THE GENERATION OF STEAM**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Delcorso, Fabrice, 78350 Jouy-En-Josas (FR); Poline, Tanguy, 75321 Paris (FR)
(74) Representative: Stang, Stefan

(57) **Abstract**

The invention relates to a method and an electrolysis arrangement, in which waste heat generated during an electrolysis reaction is utilised efficiently. The waste heat is transferred by means of a heat transfer medium to a water-containing medium. The thereby pre-heated water-containing medium is supplied to a degassing device. Due to the pre-heating of the water-containing medium, less steam from a steam generating device is required for degassing of the water-containing medium.

## Description

### Technical field

The invention relates to a method and an apparatus for utilising waste heat from an electrolysis reaction for the generation of steam. In particular, the apparatus is an electrolysis arrangement comprising an electrolyser, a steam generating device and a steam consumer.

### Background art

The production of hydrogen via water electrolysis co-generates oxygen and waste heat. Within the two main industrial families of technologies for water electrolysers, meaning PEM (proton exchange membrane) and alkaline based technologies, the waste heat is produced at rather low temperatures of less than 100 °C and usually is not utilised. This kind of low temperature waste heat which is difficult to utilise is often referred to as "low grade heat".

In a typical arrangement, the low grade heat extracted by the heat transfer medium (e.g. cooling water) is sent to the environment by re-cooling the heat transfer medium by air or cooling water. Hence, the extracted low grade heat is sent to the environment without any valorisation, that means it is wasted.

For example, the heat transfer medium for a PEM based electrolyser has a feed temperature of 20 to 30 °C and is heated by the electrolysis reaction in the electrolysis cell stack to 50 to 60 °C. It is then re-cooled by an air cooler to 20 to 30 °C and sent back to the electrolyser inlet. Thus, all the heat extracted is sent to the environment and is thus not utilised.

A way to utilise the low grade heat would be to use the hot water discharged from the electrolyser to heat buildings. The drawback of such a solution is that buildings are not constantly heated, but it depends on the season and the climate region. Furthermore, transporting heat on long distances is inefficient and expensive, due to the required pipelines and heat losses during transportation. So, such kind of utilisation is only interesting in cases where electrolysers are located in areas with cold climate and close to areas with a high density of buildings.

A further way to utilise low grade heat could be to generate electricity via a thermodynamic cycle, using the cooling water as a hot source of the cycle. Unfortunately, thermodynamic cycles have very low yields at those temperatures, so that economic and ecological impacts would be very low.

CN105696013 A discloses a high-temperature steam electrolytic hydrogen production system using a medium-low-temperature heat source. The high-temperature steam electrolytic hydrogen production system comprises a steam generator, a solid oxide electrolyser, a regenerative superheater, a regenerative heater, a deaerator, a water feed pump, an auxiliary electric heater, a steam pipeline, a hydrogen delivery pipeline, an oxygen delivery pipeline and a raw material water pipeline. According to the high-temperature steam electrolytic hydrogen production system, the steam generator adopting the medium-low-temperature heat source is used for generating low-temperature saturated steam. The steam is heated through waste heat generated during reactions of the solid oxide electrolyser to become high-temperature superheated steam.

### Disclosure of the invention

It is a general object of the present invention to provide a method and an apparatus which at least in part overcomes the problems and disadvantages of the prior art.

In particular, one of the objects of the present invention is to make the waste heat produced during the electrolysis reaction usable from an economic and ecological point of view.

In particular, one of the objects of the present invention is to make waste heat generated during the electrolysis reaction usable in such a way that it does not have to be transported over longer distances.

In particular, one of the objects of the present invention is to make waste heat generated during the electrolysis reaction usable within an industrial complex which also includes the electrolyser used for the electrolysis reaction.

A contribution to the at least partial solution of at least one of the above mentioned objects is provided by the subject-matter of the independent claim. The dependent claims provide preferred embodiments which contribute to the at least partial solution of at least one of the objects. Preferred embodiments of elements of a category according to the invention shall, if applicable, also be preferred for components of same or corresponding elements of a respective other category according to the invention.

The terms "having", "comprising" or "containing" etc. do not exclude the possibility that further elements, ingredients etc. may be comprised. The indefinite article "a" or "an" does not exclude that a plurality may be present.

In general, at least one of the underlying problems is at least partially solved by a method comprising the following method steps:
- Generating at least one product gas by an electrolysis reaction by means of an electrolyser;
- providing a water-containing medium to generate steam;
- supplying the water-containing medium to a degassing device, and degassing the water-containing medium in the degassing device;
- supplying the degassed water-containing medium to a steam generating device, and generating steam from the degassed water-containing medium in the steam generating device;
- supplying a portion of the steam generated in the steam generating device to the degassing device, wherein degassing of the water-containing medium is effected by the supplied steam;
- transferring at least part of the waste heat generated during the electrolysis reaction to the water-containing medium by means of a heat transfer medium before the water-containing medium is supplied to the degassing device.

The mentioned method steps do not necessarily have to be carried out in the mentioned order with regard to their chronological sequence.

According to the invention, at least a portion of the waste heat generated during the electrolysis reaction is transferred to a water-containing medium, wherein the water-containing medium is used to generate steam. The waste heat is transferred to the water-containing medium before it is supplied to a degassing device. The degassing device is configured to degas the water-containing medium. The degassing is effected by means of steam produced from the water-containing medium. That is, the water-containing medium is pre-heated by means of the transferred waste heat. This has the technical effect and advantage that less steam is required to degas the water containing medium. The steam supplied to the water containing-medium in the degassing device has the function of further heating the water-containing medium and to strip dissolved gases, mainly oxygen, contained in the water-containing medium. Thus, the higher the temperature of the water-containing medium supplied to the degassing device, the less steam is required to effect heating of the water containing medium and stripping gases from it.

From the degassed water-containing medium, steam is generated in a steam generating device. A portion of the steam thus produced is used to effect the (further) heating and degassing of the water-containing medium in the degassing device. The remaining steam, which may make up the main portion of the steam produced in the steam generating device, may then be sent to a steam user.

In one embodiment, the degassing device may be a deaerator. According to one embodiment, the pre-heated water-containing medium supplied to such a deaerator may be referred to as deaerator feed water. The water-containing medium degassed in the deaerator may be referred to as deaerated water-containing medium.

In one embodiment, the steam generating device may be a steam boiler. According to one embodiment, the water-containing medium degassed in the degassing device and supplied to the steam boiler is referred to as boiler feed water. The steam generating device may also be part of an industrial plant which generates steam from waste heat, for example a steam methane reformer (SMR), in which steam is produced in a waste heat boiler from flue gases.

In one embodiment, the product gas generated by the electrolysis reaction is hydrogen. In one embodiment, one further product gas generated by the electrolysis reaction may be oxygen. In particular, the product gases hydrogen and/or oxygen may be generated by an electrolysis reaction by means of a water-containing electrolysis medium. In particular, the water-containing electrolysis medium is pure water or an aqueous alkaline solution. The type of the water-containing medium depends on the type of the electrolyser used, for example whether a PEM (proton exchange membrane) based electrolyser is used or an electrolyser using alkaline electrolysis technology.

The water-containing electrolysis medium has to be differentiated from the water-containing medium to generate steam. The latter may also be referred to as "water-containing steam generating medium". In one embodiment, the water-containing medium to generate steam is pure water, whereby "pure water" may also contain unavoidable impurities of minor concentration, for example in the ppm or ppb range.

The at least part of the waste heat generated by the electrolysis reaction is transferred to the water containing medium by means of a heat transfer medium. That is, the waste-heat is not transferred directly to the water-containing medium, but indirectly by means of a heat transfer medium. The heat transfer medium may be water, in particular cooling water. However, any other suitable heat transfer medium may be employed, for example a coolant mixture of water and glycol.

The heat transfer medium is the medium which stores and transports the waste heat generated by the electrolysis reaction, and transfers the waste heat to the water-containing medium. In one embodiment, the heat transfer medium is used to cool the electrolyser. In particular the heat transfer medium is used to cool an electrolysis cell stack of the electrolyser.

According to one embodiment of the method, the water-containing medium is provided in the form of make-up water and/or the water-containing medium is provided in the form of a condensate by condensation of the steam after use of the steam in a steam user.

The water-containing medium is provided in the form of make-up water or a condensate. In one embodiment, the make-up water or fresh water is water provided by the production of demineralized or softened water. The condensate is preferably provided by condensation of the steam produced in the steam generating device after said steam has been used in a steam user for e.g. heating purposes. Part of the steam can be lost through the steam consumer, i.e. not the complete amount is recovered in the form of condensate. Preferably, this lost quantity of steam condensate is compensated by the make-up water.

According to one embodiment of the method, the waste heat generated by the electrolysis reaction is transferred to the make-up water and/or is transferred to the condensate, or is transferred to a mixture of the make-up water and the condensate.

According to this embodiment, the waste heat generated by the electrolysis reaction is transferred by means of the heat transfer medium
- either to the make-up water, whereby the make-up water is pre-heated before it is supplied to the degassing device,
- or to the condensate, whereby the condensate is pre-heated before it is supplied to the degassing device,
- or to a mixture of make-up water and condensate, whereby the mixture of make-up water and condensate is pre-heated before it is supplied to the degassing device.

According to one embodiment of the method, the transfer of waste heat by means of the heat transfer medium is effected by a heat exchanger and/or a heat pump.

The waste heat may be transferred from the heat transfer medium to the water-containing medium by means of a heat exchanger and/or a heat pump.

The heat exchanger may be any heat exchanger known to the skilled person, for example a shell-and-tube heat exchanger, a plate heat exchanger, or a pillow-plate based heat exchanger.

In one embodiment, the heat pump is a water-source heat pump, in which the heat transfer medium heated by the waste heat, e.g. heated cooling water, is the water source. According to one exemplary principle of such a water source heat pump, a refrigerant is evaporated in a first heat exchanger by means of thermal energy absorbed in the heat transfer medium. The refrigerant vapour flows into a compressor, which increases the pressure of the refrigerant and thus its temperature, using electricity. At a second heat exchanger, the refrigerant transfers its heat to the water-containing medium which is thereby pre-heated. The refrigerant vapour then liquefies with the help of an expansion valve, so that the refrigerant is once again ready to absorb heat from the heat transfer medium.

According to one embodiment of the method, the transfer of waste heat is performed by means of the heat transfer medium through a heat exchanger to the make-up water, producing a preheated make-up water.

According to one further embodiment of the method, the transfer of waste heat by means of the heat transfer medium is effected by a heat pump to a mixture of the preheated make-up water and the condensate.

According to one embodiment of the method, a first portion of the heat transfer medium is used to transfer waste heat to the water-containing medium, and a second portion of the heat transfer medium is re-cooled and afterwards used to cool the electrolyser. In particular, the second portion of the heat transfer medium is re-cooled and afterwards used to cool an electrolysis cell stack of the electrolyser.

To enhance flexibility of the method, only a portion of the heat transfer medium may be used to transfer waste heat to the water containing medium. This portion is referred to as the "first portion". Due to this heat transfer, the first portion of the heat transfer medium is cooled and the cooled heat transfer medium may be used to cool the electrolyser. Optionally, the first portion of the heat transfer medium may be further cooled, in particular to a predetermined target temperature, before it is used for cooling the electrolyser.

Hence, according to one embodiment of the method, the heat transfer medium is re-cooled after the waste heat has been transferred to the water-containing medium and is afterwards used to cool the electrolyser. In particular, the first portion of the heat transfer medium is re-cooled after the waste heat has been transferred to the water-containing medium and is afterwards used to cool the electrolyser.

The second portion of the heat transfer medium is not used for transferring waste heat to the water-containing medium. This second portion is directly re-cooled, e.g. by means of an air cooler, and afterwards used to cool the electrolyser.

Furthermore, at least one of the underlying problems is at least partially solved by an electrolysis arrangement, comprising
- an electrolyser configured to produce at least one product gas by an electrolysis reaction;
- a degassing device configured to degas a water-containing medium;
- a steam generating device configured to evaporate degassed water-containing medium to produce steam;
- means for feeding a portion of the generated steam from the steam generating device to the degassing device;
- at least one heat transfer device for transferring waste heat generated during the electrolysis reaction to the water-containing medium by means of a heat transfer medium, whereby the heat transfer device is arranged upstream of the degassing device.

The heat transfer device is arranged upstream of the degassing device. In particular, the heat transfer device is arranged upstream of the degassing device with respect to the direction of flow of the water-containing medium. Hence, the heat transfer device is configured and arranged to preheat the water-containing medium by means of the heat transfer medium before the water containing medium is introduced into the degassing device.

According to one embodiment of the electrolysis arrangement, the electrolysis arrangement comprises a device for providing the water-containing medium in the form of make-up water and/or comprises a device for providing the water-containing medium in the form of a condensate, the condensate being producible by condensation of the steam after use of the steam in a steam user. The device for providing the water-containing medium in the form of the condensate may comprise a steam user or is a steam user.

According to one embodiment of the electrolysis arrangement, the at least one heat transfer device is configured to transfer waste heat generated during the electrolysis reaction to the make-up water and/or is configured to transfer waste heat generated during the electrolysis reaction to the condensate, or is configured to transfer waste heat generated during the electrolysis reaction to a mixture of make-up water and condensate.

According to one embodiment of the electrolysis arrangement, the at least one heat transfer device is a heat exchanger and/or a heat pump.

According to one embodiment of the electrolysis arrangement, the electrolysis arrangement comprises a re-cooler, wherein the electrolysis arrangement is configured such that a portion of the heat transfer medium is used to transfer waste heat to the water-containing medium by means of the at least one heat transfer device, and a portion of the heat transfer medium is re-cooled in the re-cooler and used to cool the electrolyser.

Features mentioned in connection with the method according to the invention may also be essential features for the electrolysis arrangement according to the invention. Conversely, features which are essential for the electrolysis arrangement may be essential features for the method according to the invention.

### Detailed description of an exemplary embodiment

The invention will now be detailed by way of an exemplary embodiment with reference to the attached drawing. Unless otherwise stated, the drawing is not to scale.

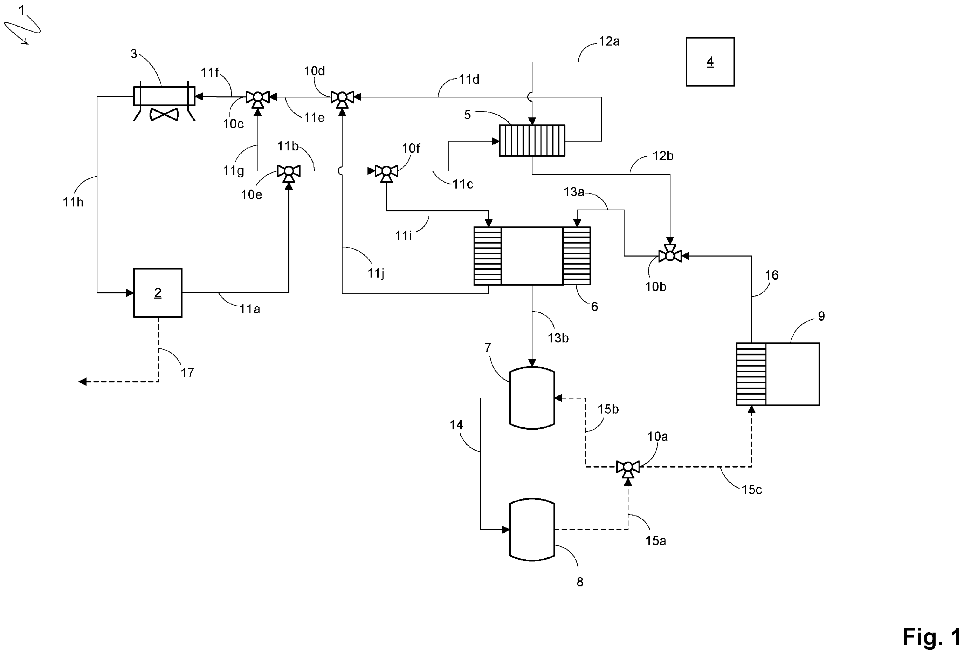

In the drawing
- Figure 1: shows a simplified block flow diagram of an electrolysis arrangement according to the invention. The electrolysis arrangement as shown is configured for carrying out the method according to the invention.

The electrolysis arrangement according to Figure 1 comprises an electrolyser 2, an air cooler 3, a supply of deionised make-up water 4, a heat exchanger 5, a heat pump 6, a deaerator 7, a steam boiler 8, and a steam user 9. Furthermore, the electrolysis arrangement 1 comprises six 3-way valves 10a to 10f. The aforementioned components are fluidically connected to each other by conduits 11a to 11j, 12a and 12b, 13a and 13b, 14, 15a to 15c, and 16. Conduits carrying a liquid medium are indicated by solid lines, whilst dashed lines indicate conduits carrying a gaseous medium. Furthermore, the electrolysis arrangement 1 has a conduit 17 for discharging hydrogen, whereby the hydrogen is subsequently fed to a further use (not shown).

The electrolyser 2 produces hydrogen and oxygen from a water-containing electrolysis medium, for example based on alkaline electrolysis with highly concentrated aqueous potash lye (aqueous KOH solution) as the electrolysis medium. The electrolyser 2 is shown in a highly simplified form as a block, but contains at least one electrolysis cell stack (not shown) in which the actual electrolysis reaction takes place. For the electrolysis reaction to take place, direct current with a working voltage up to the kV range is supplied to the electrolyser 2 with the aid of a rectifier (not shown). Part of the supplied electrical energy is converted into chemical energy by splitting water of the electrolysis medium into hydrogen and oxygen. Part of the electrical energy is not used in this respect and therefore accumulates in the form of thermal energy as waste heat, which is to be subjected to utilisation in the sense of the present invention. In the electrolysis cells of the electrolysis cell stack, a two-phase mixture of electrolysis medium and the respective product gas (hydrogen or oxygen) is produced. This mixture is separated in respective gas-liquid separators (not shown). Hydrogen produced on the cathode side is dried, freed from oxygen and afterwards discharged via conduit 17. It is then put to further use, for example for the production of methanol. Oxygen produced on the anode side is not utilised but released into the atmosphere (not shown). In the electrolysis medium depleted of water due to the electrolysis reaction, the original potassium hydroxide concentration, e.g. 3 mol/l, is restored by adding deionised water. The electrolysis medium is then recycled to the electrolysis cell stack (not shown).

The waste heat generated during the electrolysis reaction mainly accumulates in the electrolysis cell stack of the electrolyser 2. The electrolyser 2 is therefore cooled with cooling water supplied via conduit 11h. Typically, the cooling water is supplied via conduit 11h at a temperature of 20 to 30 °C. The cooling water is then heated to 70 to 80 °C as a result of the electrolysis reaction taking place in the electrolyser, and is then discharged from the electrolyser 2 via conduit 11a. Part of the heated cooling water is fed to the air cooler 3 via the 3-way valves 10e and 10c and the conduits 11g and 11f with appropriate switching of the valves. In the air cooler 3 the cooling water is cooled back to 20 to 30 °C.

A portion of the heated cooling water is fed to the heat exchanger 5 via conduits 11b and 11c, as well as the 3-way valves 10e and 10f with appropriate switching of the valves. Deionised water from the deionised make-up water supply 4 is fed to the heat exchanger 5 via conduit 12a. The heat exchanger 5 may be a shell and tube type heat exchanger for instance. The deionised water in line 12a has a temperature of about 10 °C and is pumped at a flow rate (mass flow) of 50 t/h. In the heat exchanger 5, the deionised water is heated to 45 °C, which is then passed on via conduit 12b. Thus, waste heat from the electrolysis reaction is transferred to deionised make-up water by means of the (heated) cooling water as a heat transfer medium. The deionised water is to be regarded as the water-containing medium in the sense of the invention. It is used in a further step to generate steam.

In turn, the heated cooling water supplied via line 11c is cooled in the heat exchanger 5. The method according to Figure 1 is designed in such a way that the cooling water discharged from heat exchanger 5 via conduit 11d is not yet cold enough to be used directly to cool down the electrolyser again. It is therefore routed to the air cooler 3 via conduits 11e and 11f and the 3-way valves 10c and 10d with appropriate switching of the valves. The final cooling of the cooling water to the target temperature of 20 to 30 °C then takes place in the air cooler 3.

The pre-heated deionised water discharged from the heat exchanger 5 is continued via conduit 12b and combined with a condensate from conduit 16 via the 3-way valve 10b. The condensate in conduit 16 is obtained by condensation of steam in the steam user 9 and has a temperature of about 90 °C. It is pumped at a flow rate (mass flow) of 50 t/h. By combining the condensate stream from conduit 16 and the stream of heated deionised water from conduit 12b, a stream of a deaerator feed water with a flow rate (mass flow) of 100 t/h is obtained in conduit 13a. The stream in conduit 13a has a temperature of about 50 °C. This stream of conduit 13a is further heated to a temperature of 90 °C by means of the heat pump 6. The heat pump 6 uses the stream 11i as a heat source. Stream 11i represents a partial stream of the heated cooling water generated in the electrolyser and is branched off from conduit 11b with the aid of the 3-way valve 10f. Thus, waste heat from the electrolysis reaction is transferred to a mixture of deionised make-up water and condensate by means of the (heated) cooling water as a heat transfer medium, with the aid of a heat pump using the heat transfer medium as a heat source.

The stream discharged from the pressure side of the heat pump 6 has a temperature of 90 °C at a flow rate (mass flow) of 100 t/h. This stream is supplied to the deaerator 7 via conduit 13b. In the deaerator 7, the degassing device in the sense of the invention, the deaerator feed water supplied via conduit 13b is degassed. This is effected with the aid of steam, which is fed into the deaerator 7 via conduit 15b. The deaerator feed water is heated to at least 105 °C in the deaerator 7 and is thus freed from oxygen and other undesired gases. The steam supplied via conduit 15b represents a partial flow of the steam generated in the steam generator 8, which is branched off from conduit 15a with the aid of the 3-way valve 10a.

The degassed water is discharged from the deaerator 7 via conduit 14 and supplied to the steam boiler 8. Steam is generated in the steam boiler 8, the main quantity of which is passed on to the steam user 9 via conduit 15c. In steam user 9 the steam is used, for example, for heating an industrial chemical process. The used steam accumulates as condensate with a temperature of about 90 °C and is then available again as a water-containing medium for steam generation via conduit 16.

For the embodiment of Figure 1 and as described above, 4,7 MW of thermal energy are extracted from the cooling water (heat transfer medium) and are transferred to the deionised make-up water and condensate (water-containing medium), which are supplied to the deaerator. Thus, less steam has to generated by the steam boiler 8 which is used for degassing the deaerator feed water in conduit 13b supplied to the deaerator 7. For a natural gas operated steam boiler working 8760 hours per year, this represents 44,7 GWh per year LHV of natural gas saved, based on the assumption that the steam boiler has an efficiency of 90%. Thus, 8400 tons of carbon dioxide emissions are avoided per year.

### List of reference signs

- 1: electrolysis arrangement configured to carry out method
- 2: electrolyser
- 3: air cooler
- 4: deionised make-up water supply
- 5: heat exchanger
- 6: heat pump
- 7: deaerator (degassing device)
- 8: steam boiler (steam generating device)
- 9: steam user
- 10a-10f: 3-way valve
- 11a-11j: cooling water conduit (heat transfer medium conduit)
- 12a, 12b: deionised make-up water conduit
- 13a, 13b: deaerator feed water conduit
- 14: boiler feed water conduit
- 15a-15c: steam conduit
- 16: condensate conduit
- 17: hydrogen conduit

## Claims

1. Method comprising the following method steps:
- Generating at least one product gas by an electrolysis reaction by means of an electrolyser (2);
- providing a water-containing medium to generate steam;
- supplying the water-containing medium to a degassing device (7), and degassing the water-containing medium in the degassing device (7);
- supplying the degassed water-containing medium to a steam generating device (8), and generating steam from the degassed water-containing medium in the steam generating device (8);
- supplying a portion of the steam generated in the steam generating device (8) to the degassing device (7), wherein degassing of the water-containing medium is effected by the supplied steam;
- transferring at least part of the waste heat generated during the electrolysis reaction to the water-containing medium by means of a heat transfer medium before the water-containing medium is supplied to the degassing device (7).

2. The method according to claim 1, **characterized in that** the water-containing medium is provided in the form of make-up water and/or the water-containing medium is provided in the form of a condensate by condensation of the steam after use of the steam in a steam user (9).

3. The method according to claim 2, **characterized in that** the waste heat generated by the electrolysis reaction is transferred to the make-up water and/or is transferred to the condensate, or is transferred to a mixture of the make-up water and the condensate.

4. The method according to any one of the preceding claims, **characterized in that** the transfer of waste heat by means of the heat transfer medium is effected by a heat exchanger (5) and/or a heat pump (6).

5. The method according to claim 4, **characterized in that** the transfer of waste heat is performed by means of the heat transfer medium through a heat exchanger (5) to the make-up water, producing a preheated make-up water.

6. The method according to claim 5, **characterized in that** the transfer of waste heat by means of the heat transfer medium is effected by a heat pump (6) to a mixture of the preheated make-up water and the condensate.

7. The method according to any one of the preceding claims, **characterized in that** a first portion of the heat transfer medium is used to transfer waste heat to the water-containing medium, and a second portion of the heat transfer medium is re-cooled and afterwards used to cool the electrolyser (2).

8. The method according to claim 7, **characterized in that** the heat transfer medium is re-cooled after the waste heat has been transferred to the water-containing medium and is afterwards used to cool the electrolyser (2).

9. Electrolysis arrangement (1), comprising
- an electrolyser (2) configured to produce at least one product gas by an electrolysis reaction;
- a degassing device (7) configured to degas a water-containing medium;
- a steam generating device (8) configured to evaporate degassed water-containing medium to produce steam;
- means for feeding a portion of the generated steam from the steam generating device (8) to the degassing device (7);
- at least one heat transfer device (5, 6) for transferring waste heat generated during the electrolysis reaction to the water-containing medium by means of a heat transfer medium, whereby the heat transfer device (5, 6) is arranged upstream of the degassing device (7).

10. The electrolysis arrangement (1) according to claim 9, **characterized in that** the electrolysis arrangement (1) comprises a device (4) for providing the water-containing medium in the form of make-up water and/or comprises a device for providing the water-containing medium in the form of a condensate, the condensate being producible by condensation of the steam after use of the steam in a steam user (9).

11. The electrolysis arrangement (1) according to claim 10, **characterized in that** the at least one heat transfer device (5, 6) is configured to transfer waste heat generated during the electrolysis reaction to the make-up water and/or is configured to transfer waste heat generated during the electrolysis reaction to the condensate, or is configured to transfer waste heat generated during the electrolysis reaction to a mixture of make-up water and condensate.

12. The electrolysis arrangement (1) according to any one of claims 9 to 11, **characterized in that** the at least one heat transfer device is a heat exchanger (5) and/or a heat pump (6).

13. The electrolysis arrangement (1) according to any one of claims 9 to 12, **characterized in that** the electrolysis arrangement (1) comprises a re-cooler (3), wherein the electrolysis arrangement (1) is configured such that a portion of the heat transfer medium is used to transfer waste heat to the water-containing medium by means of the at least one heat transfer device (5, 6), and a portion of the heat transfer medium is re-cooled in the re-cooler (3) and used to cool the electrolyser (2).
